# FASCICULE DE BREVET EUROPEEN

(11) **EP 2 695 353 B1**
(45) Date de publication et mention de la délivrance du brevet: **06.05.2015**
(21) Numéro de dépôt: 12710726.6
(22) Date de dépôt: 26.03.2012
(51) Int. Cl.: H04L 29/06, G06F 21/00, H04W 24/06, H04W 12/12

(54) **TEST DE LA RÉSISTANCE D'UN MODULE DE SÉCURITÉ D'UN DISPOSITIF DE TÉLÉCOMMUNICATION COUPLE A UN CIRCUIT NFC CONTRE DES ATTAQUES PAR DÉTOURNEMENT DE CANAL DE COMMUNICATION**
PRÜFUNG DES WIDERSTANDES EINES SICHERHEITSMODULS EINER AN EINE NFC-SCHALTUNG GEKOPPELTEN TELEKOMMUNIKATIONSVORRICHTUNG GEGEN ANGRIFFE DURCH FEHLLEITUNG EINES KOMMUNIKATIONSKANALS
SECURITY MODULE RESISTANCE TEST OF A TELECOMMUNICATION DEVICE COUPLED TO A NFC CIRCUIT AGAINST ATTACKS BY MISROUTING OF COMMUNICATION CHANNEL

(30) Priorité: 05.04.2011 FR 1152921
(43) Date de publication de la demande: 12.02.2014
(73) Titulaire: Proton World International N.V., 1930 Zawentem (BE)
(72) Inventeur: HUQUE, Thierry, B-1367 Ramillies (BE); VAN NIEUWENHUYZE, Olivier, B-1970 Wezembeek-Oppem (BE)
(74) Mandataire: Thibon, Laurent
(86) Numéro de dépôt international: PCT/EP2012/055312
(87) Numéro de publication internationale: WO 2012/136501

(56) Documents cités:
- "Smart Cards; Test specification for the Host Controller Interface (HCI); Part 2: UICC features (Release 7)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEST, no. V7.2.0, 1 octobre 2010 (2010-10-01), XP014061388,
- "Smart Cards; UICC - Contactless Front-end (CLF) Interface; Host Controller Interface (HCI) (Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEC, no. V10.2.0, 1 mars 2011 (2011-03-01), XP014064616,
- GERALD MADLMAYR ET AL: "Management of Multiple Cards in NFC-Devices", 8 septembre 2008 (2008-09-08), SMART CARD RESEARCH AND ADVANCED APPLICATIONS; [LECTURE NOTES IN COMPUTER SCIENCE], SPRINGER BERLIN HEIDELBERG, BERLIN, HEIDELBERG, PAGE(S) 149 - 161, XP019104509, ISBN: 978-3-540-85892-8 page 157, ligne 8 - ligne 33 page 159, ligne 6 - page 160, ligne 23

## Description

### Domaine de l'invention

La présente invention concerne de façon générale les transactions effectuées au moyen d'un dispositif mobile de télécommunication de type téléphone portable.

L'invention s'applique plus particulièrement à l'évaluation de la résistance d'un tel dispositif équipé en outre d'un circuit de communication en champ proche (NFC - Near Field Communication) contre des attaques par tentative de déroutement de canaux de communication entre ce circuit et un module de sécurité du dispositif.

### Exposé de l'art antérieur

De plus en plus, les téléphones mobiles sont équipés d'une interface de communication en champ proche qui leur permet de combiner des fonctions de transpondeurs électromagnétiques avec des fonctions de téléphonie mobile. En particulier, cela adjoint au dispositif mobile de télécommunication de type assistant personnel, téléphone mobile, Smartphone, etc., des fonctions d'émulation d'un transpondeur électromagnétique, de type carte sans contact ou lecteur de carte sans contact. Cela enrichit considérablement les fonctionnalités du dispositif mobile qui peut alors servir, par exemple, de porte-monnaie électronique, de dispositif de validation d'accès, de titre de transport, etc.

Pour émuler le fonctionnement d'une carte à puce sans contact, le dispositif mobile de télécommunication est équipé d'un circuit intégré d'émission-réception en champ proche (CLF-Contact Less Front End) également appelé routeur NFC. Ce routeur est équipé d'une tête d'émission-réception radiofréquence (RF) associée à une antenne de faible portée pour communiquer à la manière d'un transpondeur électromagnétique. Le routeur exploite les capacités du ou des processeurs de traitement du dispositif mobile pour les opérations de traitement et de mémorisation des données. Pour des applications de contrôle d'accès, de porte-monnaie électronique, de paiement, etc., on exploite un élément sécurisé permettant d'authentifier l'utilisateur. Cet élément sécurisé est soit intégré au dispositif mobile de télécommunication (circuit intégré dédié, circuit soudé à la carte de circuit imprimé), soit contenu dans un microcircuit porté par un module d'identification d'abonné (SIM-Subscriber Identification Module), ou tout autre carte amovible, par exemple, au format standard d'une carte mémoire).

Un routeur NFC peut également être présent dans un dispositif mobile de type clé USB, dans un terminal de paiement bancaire, dans un dispositif adhésif (sticker), etc.

Une émulation d'une carte sans contact dans un dispositif mobile de télécommunication est susceptible d'engendrer des faiblesses du point de vue de la sécurité des transactions.

Il serait souhaitable de pouvoir tester la résistance d'un module de sécurité de dispositif mobile de télécommunication par rapport à de telles faiblesses.

Le document "Smart Cards; Test specification for the Host Controller Interface (HCI); Part 2: UICC features (Release 7)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEST, no. V7.2.0, 1 octobre 2010 (2010-10-01), XP014061388" et le document "Smart Cards; UICC -Contactless Front-end (CLF) Interface; Host Controller Interface (HCI) (Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP TEC, no. V10.2.0, 1 mars 2011 (2011-03-01), XP014064616", décrivent un procédé d'évaluation d'un module de sécurité destiné à être connecté à un dispositif de télécommunication dans lequel un module de sécurité est connecté à un émulateur de routeur de communication en champ proche.

### Résumé

Un objet d'un mode de réalisation de la présente invention est de pallier tout ou partie des inconvénients des dispositifs mobiles de télécommunication associés à un module de transmission en champ proche.

Un autre objet d'un mode de réalisation de la présente invention est de permettre une évaluation de la résistance d'un tel dispositif et plus particulièrement de ce module de sécurité contre une tentative de piratage.

Pour atteindre tout ou partie de ces objets ainsi que d'autres, un mode de réalisation de la présente invention prévoit un procédé d'évaluation de la résistance d'un module de sécurité contre une tentative de détournement de canal de communication entre un port de ce module de sécurité et un port d'un routeur de communication en champ proche présent dans un dispositif de télécommunication auquel est destiné à être connecté le module de sécurité, comportant les étapes suivantes :
(a) connecter le module de sécurité à un émulateur de routeur de communication en champ proche ;
(b) envoyer, par l'émulateur, au moins une commande au module de sécurité, cette commande simulant que le canal utilisé n'est pas connecté à un port de communication en champ proche ; et
(c) déterminer si le module de sécurité accepte cette commande.

Selon un mode de réalisation de la présente invention, ladite commande simule une tentative de détournement de canal entre un port du module de sécurité et un port du routeur de communication en champ proche.

Selon un mode de réalisation de la présente invention, l'étape est précédée par au moins une étape dans laquelle l'émulateur envoie au module de sécurité des commandes correspondant à un usage normal du routeur en champ proche.

On prévoit également un système d'évaluation de la résistance d'un module de sécurité à une tentative de détournement d'un canal de communication entre un port de ce module de sécurité et un port d'un routeur de communication en champ proche.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente schématiquement un dispositif mobile de télécommunication du type auquel s'applique à titre d'exemple la présente invention ;
la figure 2 est un schéma illustrant une fonction d'un module de transmission en champ proche du dispositif de la figure 1 ;
la figure 3 illustre de façon très schématique une attaque susceptible d'exploiter une faiblesse du dispositif de télécommunication de la figure 1 ;
la figure 4 illustre un exemple de déroulement d'une attaque appliquée à la norme de paiement EMV ;
la figure 5 illustre un mode de mise en oeuvre d'une phase préparatoire à une telle attaque ;
la figure 6 représente, de façon très schématique et sous forme de blocs un mode de réalisation d'un système d'évaluation de la résistance d'un module de sécurité à des attaques par détournement de canal ;
la figure 7 illustre un mode de mise en oeuvre d'un procédé de test de la résistance d'un module de sécurité ; et
la figure 8 illustre, sous forme de blocs, des étapes d'un mode de mise en oeuvre d'un procédé d'évaluation de la résistance du module de sécurité à une attaque par détournement de canal.

### Description détaillée

De mêmes éléments ont été désignés par de mêmes références aux différentes figures. Par souci de clarté, seuls les éléments et étapes utiles à la compréhension de l'invention ont été représentés et seront décrits. En particulier, les protocoles de codage et de communication, que ce soit pour les transmissions en champ proche ou pour les télécommunications en mode GSM, n'ont pas été détaillés, l'invention étant compatible avec les protocoles usuels. De plus, les circuits constitutifs du dispositif mobile de communication n'ont pas non plus été détaillés, l'invention étant là encore compatible avec les dispositifs usuels, pourvu que ceux-ci soient programmables.

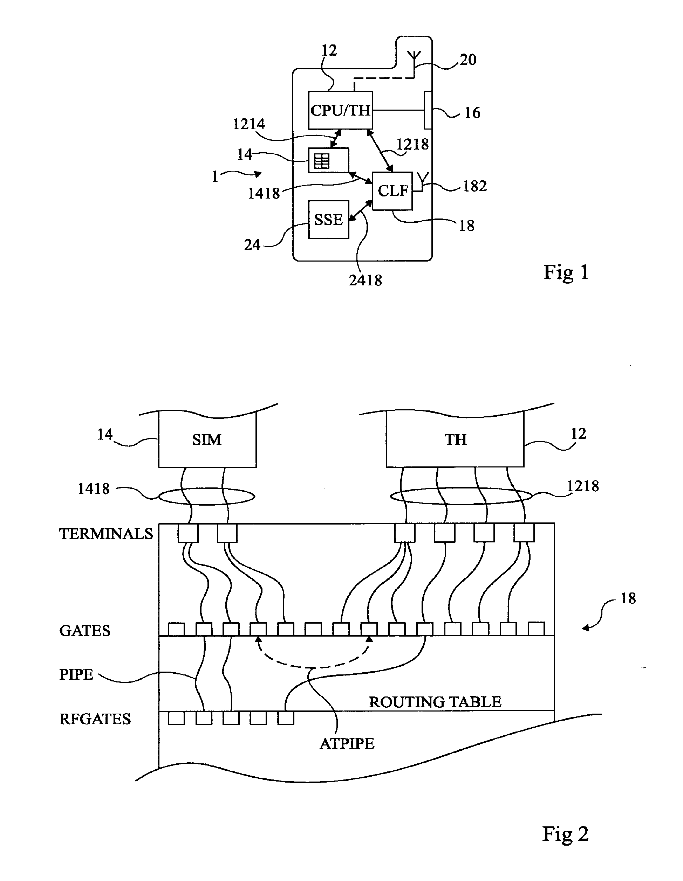

La figure 1 représente, de façon très schématique, un dispositif mobile de télécommunication (par exemple un téléphone portable) du type auquel s'applique à titre d'exemple la présente invention. Les différents éléments d'interface avec l'utilisateur (clavier, écran, haut-parleurs, etc.) n'ont pas été représentés, ces éléments n'étant pas modifiés par la mise en oeuvre des modes de réalisation qui vont être décrits.

Le dispositif 1 comporte une unité centrale de traitement 12 (CPU/TH) qui est constituée d'au moins un microcontrôleur formant le coeur du dispositif. Ce microcontrôleur est couramment désigné par son appellation anglo-saxonne "terminal host". Pour le fonctionnement en télécommunication par l'intermédiaire d'un réseau (GSM, 3G, UMTS, etc.), ce microcontrôleur exploite des informations d'identification et d'authentification fournies par un module d'identification d'abonné 14 (SIM) qui constitue un module de sécurité du dispositif. Le microcontrôleur 12 est susceptible d'exploiter une ou plusieurs mémoires internes non représentées du téléphone. Le téléphone 1 peut également comporter un lecteur 16 de carte mémoire ou autres bus de communication avec l'extérieur pour charger, dans le téléphone, des données et/ou des applications.

Les dispositifs mobiles auxquels s'appliquent les modes de réalisation décrits combinent la fonction de télécommunication avec celle d'un système de transmission sans contact en champ proche (NFC). Pour cela, le dispositif 1 comporte un circuit 18 (CLF) constituant un module de communication en champ proche à la manière d'un transpondeur électromagnétique. Ce module 18, également appelé routeur NFC, est associé à une antenne 182 distincte d'une antenne 20 destinée au réseau de téléphonie mobile. Le cas échéant, le circuit 18 est associé à un module de sécurité (SSE) 24 distinct de la carte SIM 14 et directement présent sur la carte de circuit imprimé du téléphone, ou porté par une carte amovible à microcircuit (par exemple, au format d'une carte mémoire). Un module de sécurité est un circuit électronique d'exécution des applications de manière sécurisée, garantissant la sécurité (secret/intégrité) de données manipulées par ces applications.

Les différents éléments du dispositif 1 communiquent selon différents protocoles. Par exemple, les circuits 12 et 18 communiquent par une liaison 1218 de type I2C (ou SPI), la carte SIM 14 communique avec le microcontrôleur 12 par une liaison 1214 conforme à la norme ISO 7816-3, de même que le module de sécurité 24 communique avec le routeur 18 selon cette norme par une liaison 2418. Le routeur 18 communique avec la carte SIM par exemple par un bus unifilaire 1418 (SWP - Single Wire Protocol). D'autres versions de protocoles et de liaisons sont bien entendu possibles.

Les modes de réalisation seront décrits en relation avec un téléphone GSM. L'invention s'applique toutefois plus généralement à tout dispositif de télécommunication adapté à un réseau mobile (par exemple, de type Wifi, Bluetooth, WiMax, etc.) et associé à un module de transmission sans contact (routeur NFC), par exemple, une clé USB, un terminal bancaire, un compteur de consommation d'énergie ou autres, un terminal de validation d'accès, de titres de transport, etc.

De même, on désignera par le terme routeur le module de communication en champ proche, car celui-ci intègre généralement, dans un même circuit, toutes les fonctions utiles à l'émulation d'une carte sans contact mais les modes de réalisation décrits s'appliquent à tout type de module NFC.

Le routeur 18 comporte des bornes physiques (TERMINALS) de raccordement des liaisons 1218, 1418 et 2418 et gère des ports logiques (GATES) d'affectation de ces bornes aux différentes fonctions liées aux communications en champ proche. Le routeur 18 inclut donc un processeur et des mémoires volatiles et non volatiles pour stocker, entre autres, une table de routage des différents ports logiques. Certains ports sont réservés à des fonctions d'administration du routeur et d'autres sont d'affectation libre par le routeur.

En fonctionnement, le routeur 18 met à disposition et gère différents canaux de communication avec les autres circuits 12, 14, 24, etc. du dispositif mobile pour leur donner accès aux fonctions de communication en champ proche, c'est-à-dire à des ports connectés à des circuits de transmission radiofréquence, désignés ports radiofréquence ou RF.

La figure 2 illustre, de façon très schématique et sous forme de blocs, la fonction routage du routeur 18. Pour simplifier, la figure 2 est une représentation structurelle alors qu'en pratique l'affectation des différents ports aux différents circuits du dispositif mobile est effectuée de façon logicielle par la table de routage.

Chacune des bornes (TERMINALS) du routeur se voit affecter un ou plusieurs ports (GATES). Dans l'exemple de la figure 2, on suppose que les liaisons physiques 1418 et 1218 de la carte SIM 14 et du microcontrôleur 12 sont connectées à des bornes du routeur 18 et que des ports (GATES) sont affectés à ces circuits. Plusieurs ports peuvent être affectés à un même circuit (ce qui est symbolisé en figure 2 par la connexion d'une même borne à plusieurs ports). La table de routage (ROUTING TABLE) du routeur 18 affecte certains ports à des fonctions internes (par exemple de configuration et d'administration), mais également ouvre des canaux (PIPE) entre certains ports affectés à la carte SIM ou au microcontrôleur RF, et des ports (RFGATES) inclus dans le module 18. Cela correspond à l'ouverture de canaux (PIPE) entre les circuits externes aux routeurs 18 et ces circuits de transmission RF pour la mise en oeuvre des différentes applications requérant une communication en champ proche. Par exemple, dans les applications bancaires, de transports, de porte-monnaie électronique, d'accès, etc. requérant une identification ou authentification sécurisée de l'utilisateur, un ou plusieurs canaux sont ouverts entre le routeur et la carte SIM pour exploiter les informations sécurisées d'identification de l'utilisateur et valider la transaction.

L'intégration de routeurs NFC dans des dispositifs mobiles de télécommunication et le partage d'un même module de sécurité (carte SIM ou autre) engendre certaines faiblesses du point de vue de la sécurité.

On pourrait prévoir des outils d'authentification pour s'assurer que les liaisons entre le routeur et les différents circuits externes ne sont pas piratés. Toutefois, cela s'avère insuffisant face à une faiblesse que les inventeurs ont identifiée et qui sera décrite ci-après.

Le routeur 18 ou module NFC est généralement un seul circuit intégré et ses accès externes sont plutôt bien protégés contre d'éventuelles tentatives de piratage.

Jusqu'à présent, on s'est surtout préoccupé de garantir qu'une transaction en champ proche émulée par le dispositif mobile ne permette pas à un dispositif pirate interceptant la communication en champ proche d'exploiter les informations fournies par le module de sécurité.

Toutefois, un risque reste présent car le routeur 18 gère également un canal (ATPIPE) symbolisé en pointillé en figure 2) de communication entre la carte SIM 14 (ou tout autre module de sécurité) et le microcontrôleur 12 du dispositif mobile de télécommunication. Ce canal est normalement utilisé pour que la carte SIM 14 informe le microcontrôleur 12 qu'un message lui parvient par la liaison NFC. Toutefois, il est également possible de détourner cette utilisation pour faire croire au module de sécurité 14 qu'il communique avec le routeur pour une transaction en champ proche, donc sur un canal avec les ports RF du téléphone, alors qu'il est en fait en communication avec le microcontrôleur 12.

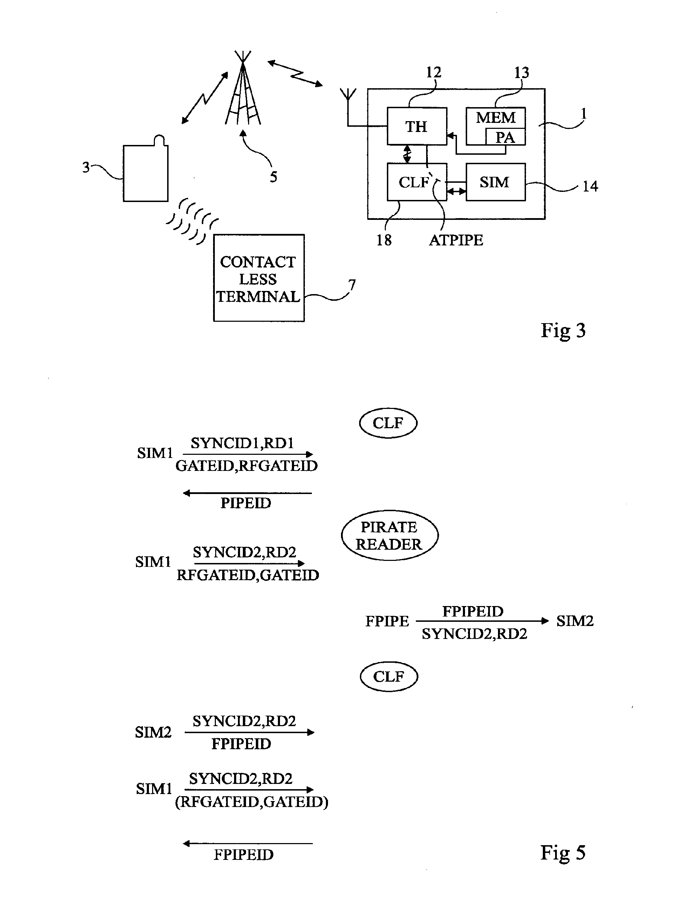

La figure 3 illustre, de façon très schématique et sous forme de blocs, l'exploitation possible d'un canal ATPIPE entre une carte SIM 14 et un microcontrôleur 12 d'un téléphone mobile 1.

On suppose que, dans une phase préparatoire à l'attaque, le téléphone GSM 1 a été piraté et qu'un canal ATPIPE a été détourné par l'intermédiaire du routeur 18 entre sa carte SIM 14 et son microcontrôleur 12. La table de routage du routeur 18 contient donc l'information de ce canal "dérouté". On suppose également qu'une application pirate (PA) a été stockée dans une mémoire 13 (non volatile) du téléphone 1 et que cette application peut donner des instructions au microcontrôleur 12. Plusieurs modes de mise en oeuvre de la phase préparatoire seront exposés ultérieurement.

L'utilisateur du dispositif 1, une fois celui-ci piraté par le chargement de l'application PA et par l'ouverture du canal ATPIPE, n'est pas en mesure, comme on le verra par la suite, de s'apercevoir d'un dysfonctionnement. Il utilise son téléphone de façon normale.

L'une des fonctions de l'application PA est de déclencher automatiquement une réponse du téléphone 1 suite à une requête provenant du réseau de télécommunication et émise par un autre dispositif mobile 3 en possession de l'attaquant. Le dispositif pirate est, par exemple, un autre téléphone GSM 3 qui utilise son propre module d'identification d'abonné pour communiquer via le réseau GSM (symbolisé par une antenne relais 5). Il peut s'agir également d'un microordinateur associé à un modem GSM.

Dans l'exemple de la figure 3, le dispositif 3 est également équipé d'un routeur sans contact, par exemple pour initier des transactions en champ proche avec une borne 7 (par exemple, un terminal NFC ou tout autre borne de communication sans contact - CONTACT LESS TERMINAL). Par exemple, le dispositif 3 est utilisé pour réaliser un achat avec un paiement devant être validé par son routeur NFC.

Normalement, pour un tel paiement, le routeur du téléphone 3 gère un canal de communication avec le module d'identification d'abonné (ou tout autre module de sécurité dédié) de ce téléphone pour authentifier l'utilisateur et valider le paiement.

La figure 4 illustre un exemple d'échange au moment de la validation du paiement dans un mécanisme tel qu'illustré en figure 3.

Le téléphone 3 ou dispositif pirate PR reçoit, de son module NFC, une demande de validation de paiement. Une telle demande est, par exemple, supportée par une application selon la norme EMV (Eurocard-Mastercard-Visa). Le routeur NFC du téléphone 3 reçoit donc une instruction de sélection de son application EMV (SELECT EMV). Au lieu d'utiliser son propre module de sécurité, le téléphone 3 utilise le réseau GSM 5 pour demander au téléphone distant 1 de valider le paiement au moyen du module d'identification d'abonné 14. Par exemple, le dispositif 3 envoie un SMS par l'intermédiaire du réseau 5 qui, lorsqu'il est reçu par le téléphone 1, est traité par l'application pirate. Ce SMS contient, par exemple, une instruction de sélection de l'application EMV (SELECT EMV). Côté téléphone 1, l'application pirate simule les requêtes provenant du port RF et utilise le microcontrôleur 12 pour transmettre ces requêtes au routeur 18 (CLF) qui les fait suivre par le canal ATPIPE au module d'identification 14 (SIM). Ce dernier reçoit donc l'instruction SELECT EMV et valide la sélection de l'application EMV. Cette validation est détournée par l'application pirate exécutée sur le microcontrôleur 12 et renvoyée au dispositif 3. L'obtention, par le dispositif pirate, de la validation de l'application EMV du module de sécurité 18 du dispositif 1 est exploitée par son routeur NFC pour communiquer avec le terminal de paiement 7. Toute la transaction de paiement est véhiculée par ce canal piraté jusqu'à la validation (OK) du paiement par la carte SIM du téléphone 1 transmise par le réseau GSM puis par le téléphone 3 jusqu'au terminal 7. Il en découle que le paiement est débité à l'abonné du téléphone 1 et non à l'attaquant possédant le dispositif 3. Le plus souvent, une application sans contact ne requiert aucune interaction avec le terminal (7, figure 3) à l'exception d'une présentation du dispositif sans contact. En particulier, aucune saisie de code (PIN) n'est nécessaire pour une transaction en champ proche afin de ne pas rallonger la durée de la transaction, de sorte que le dispositif 3 peut pirater sans difficultés le dispositif distant 1.

Les contre-mesures prévoyant des chiffrements et/ou des signatures entre la borne 7 réclamant l'authentification et le module de sécurité sont inefficaces pour contrer cette attaque. En effet, les informations entre la borne 7 et le module 14 n'ont pas besoin d'être décodées. On a en fait établi un canal de communication entre le module 14 du téléphone 1 et la borne 7 via le réseau de télécommunication 5, de sorte que le module 14 se comporte comme s'il était en transaction en champ proche avec la borne 7.

Le même type de piratage peut intervenir pour des applications d'authentification ou de validation de passage, de type accès sécurisé.

De plus, cette attaque peut également prospérer même sans que le dispositif pirate 3 utilise son propre routeur NFC, mais par exemple utilise un mode de communication à contact, pourvu que l'authentification réclamée provienne d'un module de sécurité et respecte les formats et protocoles utilisés par le protocole NFC. Par ailleurs, une telle attaque peut servir à détourner n'importe quelle information du dispositif 1 au profit d'un système pirate (par exemple, les données dupliquant le contenu de la piste magnétique d'une carte dans une application au paiement bancaire).

En outre, l'attaque peut faire intervenir la carte SIM du téléphone 1, ou tout autre module de sécurité (par exemple, le module 24, figure 1), pourvu que le canal soit géré par le routeur 18 entre ce module et un circuit (généralement le microcontrôleur 12) capable de gérer les communications sur le réseau 5.

Cette attaque de transaction en champ proche, exploitant le réseau de télécommunication, est due à la présence d'un canal de communication, via le routeur NFC, entre le module de sécurité et un microcontrôleur connecté à ce routeur.

La mise en oeuvre de l'attaque requiert une phase préparatoire dans laquelle il faut intervenir sur le téléphone 1 que l'on souhaite pirater.

Cette préparation requiert une intervention plus ou moins importante selon le niveau de sécurité apporté par la carte SIM à la gestion des canaux de communication NFC.

Dans un mode de réalisation simplifié, le microcontrôleur est autorisé à créer un canal sur n'importe quel port libre. Dans ce cas, une application pirate, chargée dans le microcontrôleur, est susceptible d'ouvrir un canal à travers le routeur NFC jusqu'à la carte SIM. Si, par la suite, la carte SIM n'effectue pas d'autres vérifications que de constater que le format des requêtes correspond à un format de trame radiofréquence émanant d'un circuit NFC, l'application pirate peut attaquer la carte SIM.

Selon un autre mode de réalisation, le module de sécurité 14 est plus évolué et vérifie l'association entre les numéros de canaux ou de ses propres ports et les ports RF.

Dans le premier cas, on considère que la carte SIM 14 ne tient pas compte du circuit avec lequel le port est ouvert (donc qu'il peut s'agir d'un port destiné au microcontrôleur). Ce code de mise en oeuvre exploite le fait que l'attribution des numéros (identifiants) de canaux est souvent séquentielle. On commence alors par demander au microcontrôleur de supprimer un canal entre la carte SIM et les ports RF. Puis, on propose la création et l'ouverture d'un canal ayant le même identifiant entre le microcontrôleur et la carte SIM.

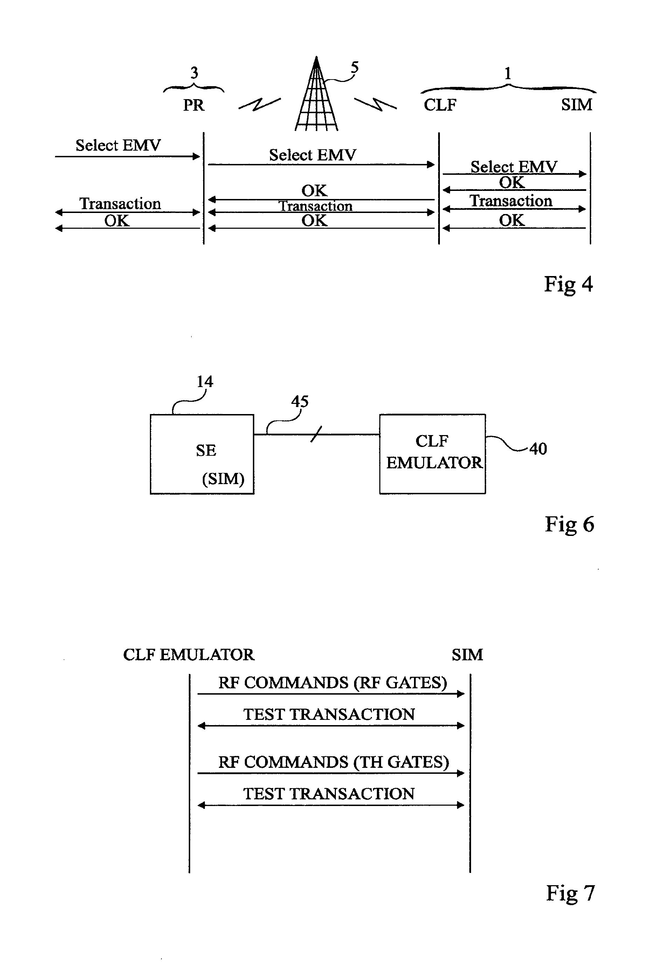

La figure 5 illustre un autre mode de mise en oeuvre d'une phase préparatoire de l'attaque visant à détourner un canal entre le routeur 18 (CLF) et la carte SIM (SIM1) d'un utilisateur. Ce mode de mise en oeuvre est plus particulièrement destiné au second exemple ci-dessus où la carte SIM s'assure, avant de transmettre des informations vers le routeur CLF, qu'elle a bien contrôlé l'ouverture du canal de communication avec celui-ci. On exploite ici le fait que, préalablement à l'initialisation du dispositif 1, la carte SIM vérifie si elle s'est déjà trouvée en présence du routeur 18. Si ce n'est pas le cas, elle reconfigure les canaux entre ses ports et le routeur NFC.

Dans un fonctionnement normal, lors d'une première connexion de la carte SIM1 dans le téléphone 1, la carte provoque l'ouverture, au niveau d'une couche dite de transport, d'au moins un canal de communication, identifié SYNCID1, avec le routeur CLF. Pour cela, la carte SIM1 envoie au routeur CLF à la fois une donnée SYNCID1 de synchronisation et un nombre quelconque (typiquement un nombre aléatoire RD1). Le nombre RD1 est stocké dans le routeur CLF et sert à la carte 14 pour vérifier qu'elle a déjà provoqué une ouverture de canal avec ce routeur. A chaque initialisation, la carte vérifie l'existence du numéro RD1 dans le routeur. Au niveau applicatif, la carte demande au routeur l'ouverture d'un canal entre un de ses ports, identifié GATEID et l'un des ports RF, identifié RFGATEID. Le routeur ouvre alors un canal et lui attribue un identifiant PIPEID et, à la fois, le stocke dans la table de routage et le communique à la carte SIM1. A chaque fois qu'une donnée est demandée par le routeur, la carte SIM1 vérifie que l'identifiant PIPEID du canal est correcte.

Pour mettre en place l'attaque, le pirate doit disposer pendant un laps de temps du téléphone mobile 1 et de la carte SIM1. Cela est relativement facile, par exemple, en se faisant prêter le téléphone mobile pour soi-disant passer un appel, ou en utilisant frauduleusement un téléphone lors d'une intervention de maintenance, par exemple dans un magasin de téléphonie mobile.

Avec la carte SIM1 et le téléphone muni du routeur 1, le fraudeur commence par introduire la carte SIM1 dans un dispositif pirate (pirate READER), par exemple un autre téléphone mobile dont le microcontrôleur est capable d'exécuter un programme de piratage respectant les fonctions décrites, ou un ordinateur équipé d'un lecteur de carte et qui simule un routeur. La carte SIM1 n'ayant jamais rencontré le routeur NFC du dispositif pirate ou le routeur émulé par celui-ci, elle génère un nouvel identifiant de synchronisation SYNCID2. Elle renvoie des identifiants de port RFGATEID et GATEID pour l'ouverture des canaux correspondants. Le routeur pirate attribue alors, à au moins une paire de ports, un canal FPIPEID qui correspond à une passerelle entre le routeur et un port externe du microcontrôleur, au lieu d'associer le port GATEID à un port RF. L'identifiant FPIPEID est alors chargé dans une carte SIM2 falsifiée ainsi que les identifiants RSYNCHID2 et RD2. La carte SIM2 contient alors une table de routage associant, au canal FPIPEID, les ports RFGATEID et GATEID.

Puis, cette carte SIM2 est introduite dans le téléphone 1. Les identifiants SYNCID2 et RD2 sont alors transférés au routeur CLF18 pour l'ouverture du canal FPIPEID entre des ports désignés GATEID et RFID. Cela revient à modifier la table de routage du routeur pour que, lorsque le canal entre les ports GATEID et RFGATEID est appelé, le canal affecté soit le canal FPIPEID au lieu de PIPEID.

L'attribution du canal FPIDEID peut comprendre diverses formes en fonction de la façon avec laquelle les canaux sont attribués aux ports dans le routeur. Par exemple, on passe par une phase d'observation de l'affectation des canaux en plaçant la carte SIM2 dans le routeur pour observer la méthode d'affectation des canaux, avant d'introduire cette carte SIM2 dans le lecteur pirate.

On replace enfin la "vraie" carte SIM1 dans le téléphone 1. Comme le routeur CLF connaît les identifiants RD2 et SYNCID2, la carte considère "connaître" le routeur et ne provoque pas la réouverture de canaux avec celui-ci. Lorsque la carte SIM1 demande une communication vers le port RFGATEID, le routeur utilise le canal FPIPEID qui a été attribué.

Le terminal GSM a bien été piraté, c'est-à-dire qu'un canal FPIPE (ou ATPIPE, figure 2) a été ouvert entre un port GATEID de la carte SIM et un port du microcontrôleur 12, alors que la carte SIM1 croit que ce canal relie son port GATEID au port RFGATEID. Ce canal peut alors être détourné pour un accès à distance par le réseau GSM depuis un autre terminal (figure 3). Le téléchargement de l'application pirate PA peut s'effectuer soit ultérieurement, soit en même temps que la génération du canal pirate.

Diverses possibilités existent en fonction du dispositif 1 en présence pour avoir accès à sa table de routage. Par exemple, on peut lire la table de routage. Si cela n'est pas possible, on peut lors du passage de la carte SIM1 dans le lecteur pirate, émuler un fonctionnement de circuit CLF, afin d'obtenir la configuration complète stockée dans cette carte. On peut également utiliser une carte pirate SYNC2 ou un émulateur de carte pour, dans le téléphone VALID1, extraire les informations de la table de routage.

On voit donc qu'il est possible de paramétrer un détournement d'un canal de communication entre un module de sécurité et un routeur NFC pour établir un canal entre ce module et le microcontrôleur du téléphone, externe au routeur NFC.

Pour que l'utilisateur du téléphone 1 ne s'aperçoive pas du piratage, même lorsqu'il utilise son mode sans contact, l'application pirate doit comporter la fonction de rediriger le canal FPIPE vers les circuits RF du routeur lorsqu'une requête d'information vers la carte SIM est émise par le routeur 18.

La figure 6 représente, de façon très schématique et sous forme de blocs, un mode de réalisation d'un système d'évaluation de la résistance d'un module de sécurité SE, par exemple une carte SIM 14, contre des attaques par détournement de canaux entre ce module de sécurité et un routeur CLF. Le système comporte un émulateur 40 de routeur CLF (CLF EMULATOR) auquel est reliée la carte SIM 14 (liaison 45). Le rôle de cet émulateur est de tester le fonctionnement de la carte SIM et, plus généralement, d'un module de sécurité destiné à être associé à un dispositif de télécommunication 1 du type de celui illustré par la figure 1, pour évaluer la résistance de ce module de sécurité aux attaques par détournement de canal susmentionnées.

La liaison 45 entre l'émulateur 40 et le module de sécurité 14 est du type de la liaison 1418 décrite ci-dessus en relation avec les figures 1 et 2.

La figure 7 représente, de façon très schématique, un exemple de commande susceptible d'être émulée par l'émulateur 40.

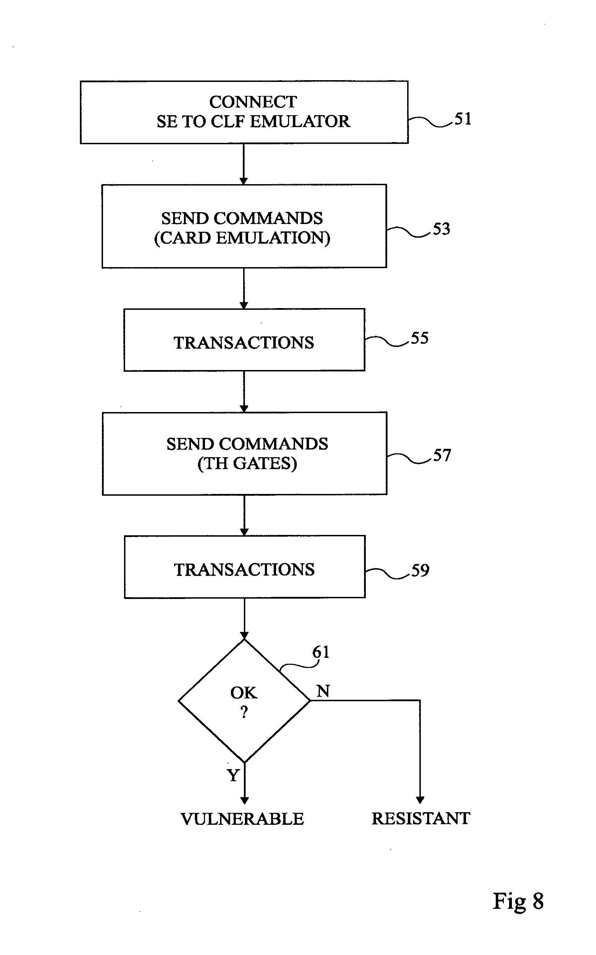

La figure 8 est un schéma bloc illustrant des étapes d'un procédé d'évaluation de la résistance du module de sécurité aux attaques par détournement de canal.

Dans une première étape (bloc 51, CONNECT SE TO CLF EMULATOR), la carte SIM 14 est reliée électriquement (par la liaison 45) à l'émulateur 40.

Dans une deuxième étape (bloc 53, SEND COMMANDS (CARD EMULATION)), l'émulateur 40 envoie des commandes à la carte en simulant que ces commandes proviennent de l'interface radiofréquence du routeur CLF (RF COMMANDS (RF GATE), figure 7). Cette étape est suivie d'un ensemble de transactions (bloc 55, TRANSACTIONS), par exemple la simulation d'un paiement validé par la carte SIM. Les étapes 53 et 55 sont optionnelles mais visent à s'assurer que le module de sécurité est bien compatible avec un fonctionnement dans un dispositif de télécommunication équipé d'un routeur CLF.

Les étapes 53 et 55 sont suivies d'étapes 57 et 59 au cours desquelles l'émulateur 40 envoie des commandes (SEND COMMANDS) en émulant le fait que le canal utilisé n'est pas connecté à des ports radiofréquence mais à des ports de l'unité centrale du dispositif de télécommunication (TH GATES). L'envoi de ces commandes est suivi d'un essai d'envoi de transactions (bloc 59) et d'un échange entre la carte SIM et l'émulateur.

Selon que l'émulateur 40 détecte (bloc 61, OK ?) un fonctionnement correct (sortie Y du bloc 61) ou un blocage (sortie N du bloc 61) par le module de sécurité, cela signifie que la carte est vulnérable à ces attaques (VULNERABLE) ou résistante à de telles attaques (RESISTANT).

En variante, l'évaluation de la résistance est effectuée alors que la carte ou autre module de sécurité est présent dans le dispositif de télécommunication. Les étapes d'évaluation de la résistance consistent alors à simuler une attaque du dispositif de télécommunication et plus précisément de son module de sécurité par le biais du réseau GSM. Si l'attaque prospère c'est que le dispositif est vulnérable. Dans le cas contraire c'est qu'il est résistant à de telles attaques.

Divers modes de réalisation ont été décrits. Diverses variantes et modifications apparaîtront à l'homme de l'art. En particulier, bien que les modes de réalisation aient été décrits en relation avec une carte SIM, ils s'appliquent plus généralement au test de la résistance à des attaques par détournement de canal de communication de tout module de sécurité analogue. De plus, la mise en oeuvre pratique des modes de réalisation décrits est à la portée de l'homme du métier à partir des indications fonctionnelles données ci-dessus et en utilisant des outils en eux-mêmes connus.

## Revendications

1. Procédé d'évaluation de la résistance d'un module de sécurité contre une tentative de détournement de canal de communication entre un port (GATE) de ce module de sécurité (14) et un port (RFGATE) d'un routeur de communication en champ proche (18) présent dans un dispositif de télécommunication (1) auquel est destiné à être connecté le module de sécurité, comportant l'étape suivante :
(a) connecter (51) le module de sécurité à un émulateur (40) de routeur de communication en champ proche ;
**caractérisé en ce qu'**il comporte les étapes suivantes : (b) envoyer (57, 59), par l'émulateur, au moins une commande au module de sécurité, cette commande simulant que le canal utilisé n'est pas connecté à un port de communication en champ proche (RFGATE) ; et
(c) déterminer (61) si le module de sécurité accepte les commandes.

2. Procédé selon la revendication 1, dans lequel ladite commande simule une tentative de détournement de canal entre un port du module de sécurité et un port du routeur de communication en champ proche.

3. Procédé selon la revendication 1 ou 2, dans lequel l'étape (b) est précédée par au moins une étape (53, 55) dans laquelle l'émulateur envoie au module de sécurité des commandes correspondant à un usage normal du routeur en champ proche.

4. Système d'évaluation de la résistance d'un module de sécurité à une tentative de détournement d'un canal de communication entre un port de ce module de sécurité et un port d'un routeur de communication en champ proche, adapté à la mise en oeuvre du procédé selon l'une quelconque des revendications précédentes.

## Patentansprüche

1. Ein Verfahren zum Beurteilen der Resistenz bzw. Widerstandsfähigkeit eines Sicherheitsmoduls gegen einen Versuch, einen Kommunikationskanal zwischen einem Anschluss bzw. Gate (GATE) dieses Sicherheitsmoduls (14) und einem Anschluss (RFGATE) eines Nahbereichskommunikationsrouters (18) umzuleiten, der in einer Telekommunikationseinrichtung (1) vorliegt, mit dem das Sicherheitsmodul verbunden werden soll, das den folgenden Schritt aufweist:
(a) Verbinden (51) des Sicherheitsmoduls mit einem Nahbereichskommunikationsrouter-Emulator (40);
das **dadurch gekennzeichnet ist, dass** es die folgenden Schritte aufweist:
(b) Senden (57, 59), durch dem Emulator, wenigstens eines Befehls an das Sicherheitsmodul, wobei dieser Befehl die Tatsache simuliert, dass der Kanal nicht mit einem Nahbereichskommunikationsanschluss (RFGATE) verbunden ist; und
(c) Bestimmen (61), ob das Sicherheitsmodul diesen Befehl akzeptiert.

2. Verfahren nach Anspruch 1, wobei der Befehl einen Versuch einer Kanalumleitung zwischen einem Anschluss des Sicherheitsmoduls und einem Anschluss des Nahbereichskommunikationsrouters simuliert.

3. Verfahren nach Anspruch 1 oder 2, wobei dem Schritt (b) wenigstens ein Schritt (53, 55) vorausgeht, während dem der Emulator Befehle an das Sicherheitsmodul sendet, die einer normalen Nutzung des Nahbereichsrouters entsprechen.

4. Ein System zum Beurteilen der Resistenz bzw. Widerstandsfähigkeit eines Sicherheitsmoduls gegen einen Versuch, einen Kommunikationskanal zwischen einem Anschluss bzw. Gate dieses Sicherheitsmoduls und einem Anschluss eines Nahbereichskommunikationsrouters umzuleiten, das in der Lage ist, das Verfahren nach einem der vorhergehenden Ansprüche zu implementieren.

## Claims

1. A method for assessing the resistance of a security module against an attempt to divert a communication pipe between a gate (GATE) of this security module (14) and a gate (RFGATE) of a near-field communication router (18) present in a telecommunication device (1) to which the security module is intended to be connected, comprising the step of:
(a) connecting (51) the security module to a near-field communication router emulator (40);
**characterized in that** it comprises the steps of:
(b) having the emulator send (57, 59) at least one command to the security module, this command simulating the fact that the pipe used is not connected to a near-field communication gate (RFGATE); and
(c) determining (61) whether the security module accepts this command.

2. The method of claim 1, wherein said command simulates an attempt of pipe diversion between a gate of the security module and a gate of the near-field communication router.

3. The method of claim 1 or 2, wherein step (b) is preceded by at least one step (53, 55) during which the emulator sends to the security module commands corresponding to a normal use of the near-field router.

4. A system for assessing the resistance of a security module against an attempt to divert a communication pipe between a gate of this security module and a gate of a near-field communication router, capable of implementing the method of any of the foregoing claims.
